# EUROPEAN PATENT SPECIFICATION

(11) **EP 1 154 190 B1**
(45) Date of publication and mention of the grant of the patent: **12.10.2005**
(21) Application number: 01304106.6
(22) Date of filing: 04.05.2001
(51) Int. Cl.: F16L 37/084, F16L 37/12

(54) **Apparatus relating to tube couplings**
Rohrkupplung
Raccord de tuyaux

(30) Priority: 10.05.2000 GB 0011317
(43) Date of publication of application: 14.11.2001
(73) Proprietor: John Guest International Limited, Middlesex UB7 8JL (GB)
(72) Inventor: Guest, John Derek, Maidenhead SL6 2EX (GB)
(74) Representative: Bayliss, Geoffrey Cyril

(56) References cited:
- EP-A- 0 756 125
- WO-A-98/38450
- US-A- 5 395 140
- US-A- 5 401 063
- US-A- 5 628 531
- US-A- 5 649 724
- US-A- 5 931 509

## Description

This invention relates to couplings for receiving tubes or stuffer pins or the like such as disclosed in EP-A-00300504.8 and EP-A-756125.

US-A-5,658,020 discloses a quick connector for fast connection of fluid carrying assemblies and includes a connector body for the connector components and a redundant clip, which is adapted to engage an upset bead of the male tube. The redundant clip is generally L-shaped and includes a retaining head that is inserted into the connector body and is adapted to engage the upset bead. A body portion, which extends along the side of the connector body and in the preferred embodiment is contoured to mate with the , connector body, extends between the retaining head and a base member. The base includes a camming edge for facilitating the insertion of the retainer head into the connector body.

WO 98/38 450 A discloses a releasable connector for connecting tubing such as used in fuel lines and has a display member to indicate when positive locking has occurred. The display member is attached to the outside of the housing of the connector and has a strap supporting a cover portion. The cover portion has a pair of resilient flanges which are insertable into an opening in the housing of the connector. The flanges extend into a chamber to engage an annular ring of a conventional male tube end. The annular portion of the tube end displaces the flanges of the display member after passing through a locking member contained in the housing of the connector. In this way, the tamper indicator indicates that the tube end has been positively received in the locking position.

The European Patent Publication No. 0829671 describes and illustrates a number of connectors for latching engagement with tubes or stuffer pins in which a tube must be pressed into the connector body for the latching arrangement provided to operate and retain the tube in the body. Typically, a raised bead is provided on the tube with which the latch in the coupling body engages.

US-A-5,931,509 discloses a tube coupling comprising all the features of the preamble of claim 1, having a connection verification and secondary latch device. The connector ring has a primary latching mechanism which engages a first annular projection on the tube and a second latching mechanism which engages a second annular projection on the tube. The latching mechanisms extend outside of the housing connector which receives the conduit thus allowing an inspection of the assembly to ensure that a complete connection by both latching mechanisms has been accomplished.

The invention provides a connector assembly, comprising a tubular conduit including a first end having first and second annular projections disposed a predetermined distance from said first end, a retainer element including primary latching means releasably engageable with said first annular projection and secondary latching means extending from and attached to said primary latching means, means for sealing the connector assembly, and a housing for receiving said first end of said tubular conduit, said housing including at least one blocking wall, whereby upon fully inserting said tubular conduit within said housing, said primary latching means engage said first annular projection of said tubular conduit and said secondary latching means engage said second annular projection of said tubular conduit.

There is a need for secondary latches to be fitted to such connectors in certain applications such as in tube connectors used in motor vehicle engine compartments. Moreover there is a requirement that the second latch is engaged in a separate manual operation from the primary assembly operation of inserting a tube in the coupling body and that the second latch only operates properly if the tube has been inserted so the primary latch within the coupling body is successfully engaged.

It is an object of this invention to meet these additional requirements.

This invention provides a coupling for a tube having a feature spaced from an end of the tube for engagement by latching devices, the coupling comprising a coupling body having a throughway open at one end to receive an end portion of the tube, a seal mounted in the coupling body at a location spaced from said open end thereof to engage and seal with the outer periphery of the tube, a first latching device disposed within the coupling body having at least one latch to engage automatically with the feature on the tube when the tube has been inserted sufficiently into the throughway to engage with the seal to thereby retain the tube in the coupling body, and a second, manually operable latching device disposed externally of the coupling body mounted on the coupling body, manually moveable between one operative position in which the second latching device is engageable with the feature on the tube when the tube has been inserted into the coupling body sufficiently for the first latching device to engage to provide a second independent retention for the tube in the coupling body, and an inoperative position withdrawn from the tube to allow release of the tube from the coupling body, said second latching device comprises an end cap mounted on the coupling body, the cap having an opening in the end thereof for the tube to extend through into the coupling body wherein said end cap is encircling the open end of the coupling body and has a mounting leg on which the second latch is located, the leg being hinged to the cap to move between said operative and inoperative positions on the cap, the hinged mounting leg including an integral spring adapted to bias the second latching device towards the inoperative position withdrawn from the tube when the second latch device is disengaged from a tube in the coupling body.

Preferably in the cap and coupling body have slots through which the detent on the leg can project to engage a feature on the tube which is also engaged by the first latching device within the coupling body.

Furthermore, interengaging abutment means are provided on the detent and coupling body to retain the detent engaged in said slots in the coupling body and cap.

In one specific arrangement accords to the invention the leg is hingedly mounted to the cap and when the tube is inserted into the coupling body the second latching device is arranged to engage a second feature on the tube which is located externally of the coupling body thereby to retain the tube in the coupling body.

In the latter arrangement the detent on the arm comprises a C-shaped clip to snap around the tube.

The following is a description of some specific embodiments of the invention, reference being made to the accompanying drawings in which:
Figure 1 is a perspective view of a connector and tube end to be located in the connector with a secondary external latch in the released position;
Figure 2 is a perspective view of a connector of Figure 1 showing the tube end engaged in the connector and the secondary latch in its closed position;
Figure 3 is a detailed view of a portion of the secondary latch and circle at three on Figure 1;
Figure 4 is a cross-sectional view of the connector and tube end as shown in Figure 1;
Figure 5 is a cross-sectional view of the coupling with the tube end partially inserted and the secondary latch engaged as shown in perspective view end 2;
Figure 6 is a cross-sectional view of the coupling with the tube end fully inserted and the secondary latch engaged as shown in perspective view end 2;
Figure 7 is a perspective view of an alternative form of coupling and tube end with the tube end in alignment with the connector and an external, secondary latch on the coupling in the released position;
Figure 8 is a perspective view of the coupling of Figure 7 showing the tube end fully engaged in the coupling and the second external latch in the closed position;
Figure 9 is a cross-sectional view through the connector and tube end of Figure 7;
Figure 10 is a cross-sectional view of the connector as shown in Figure 9 with the tube end partially inserted in the coupling;
Figure 11 is a further view of the connector of Figure 9 with the tube end fully inserted in the coupling and the secondary external latch closed;
Figures 12 and 13 and 14 and 15 show perspective and cross-sectional views of further connector arrangements with the stuffer pins rather than the tube ends.

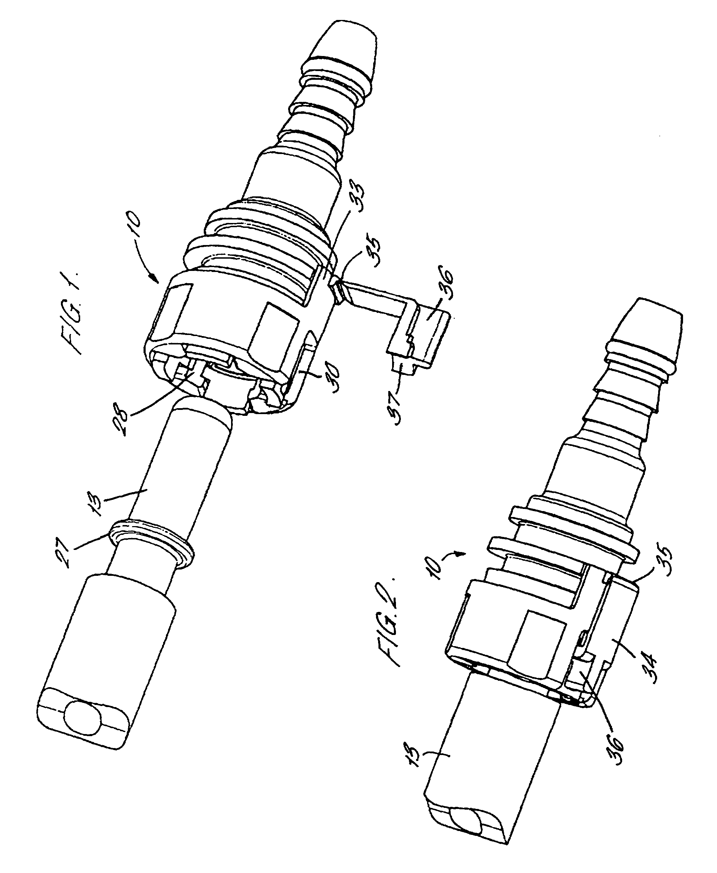

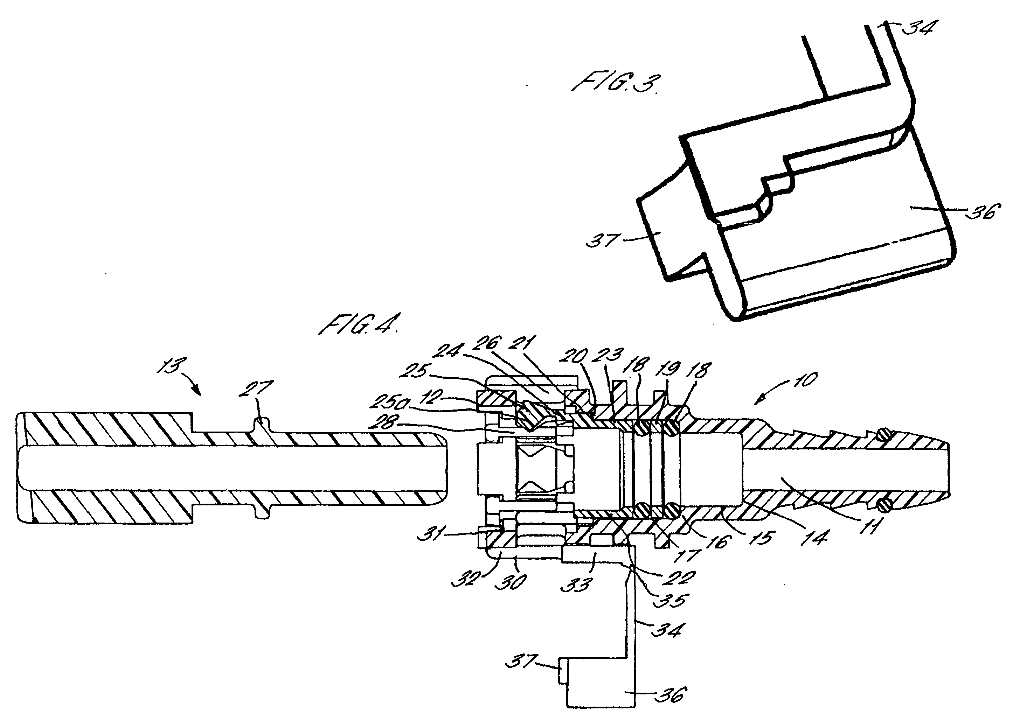

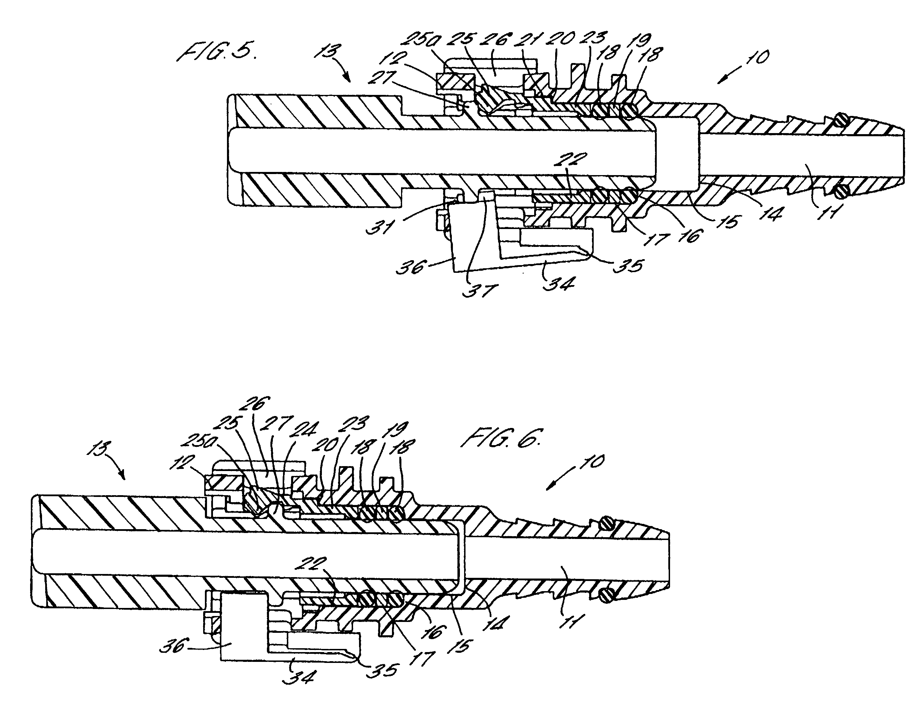

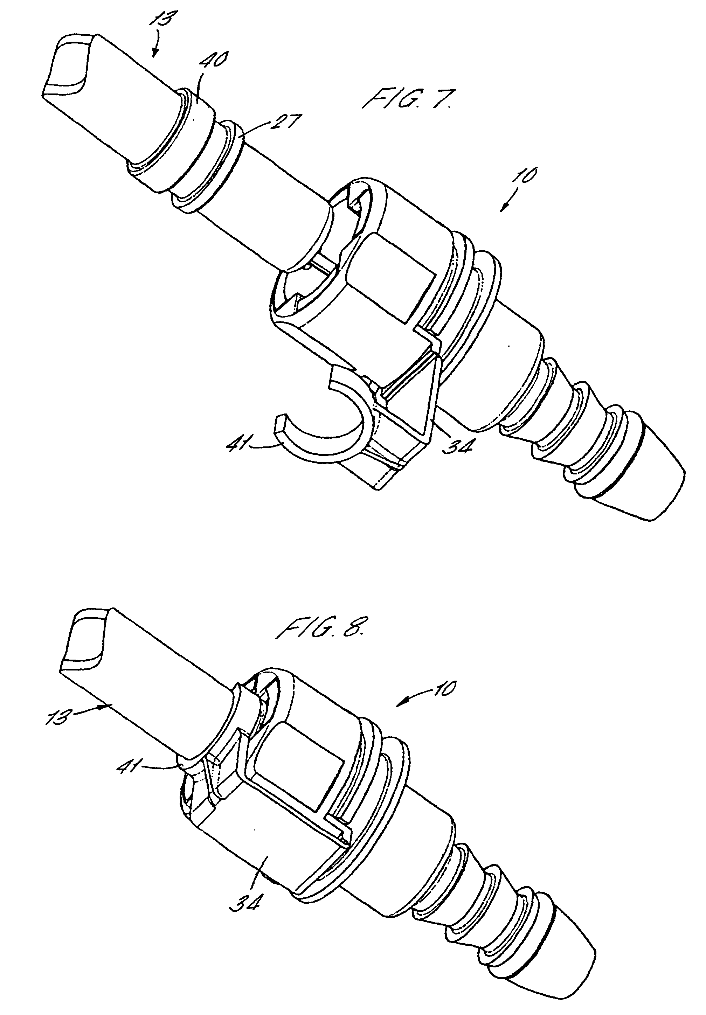

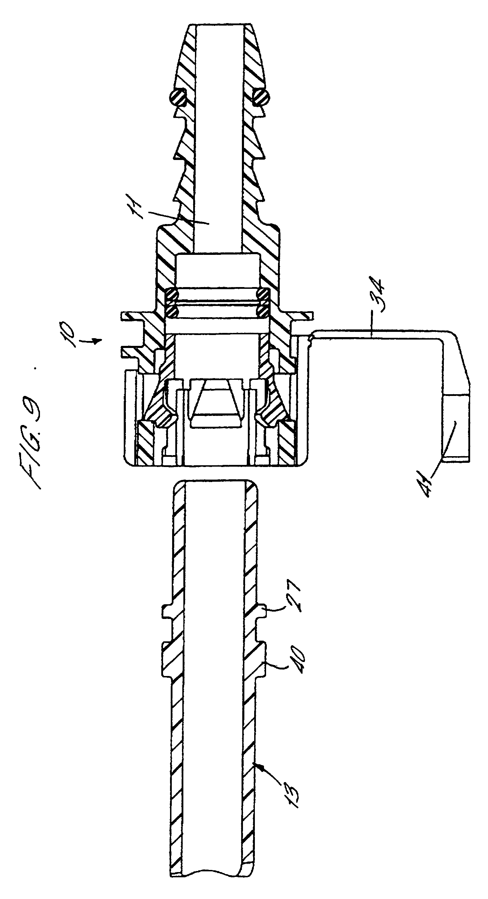

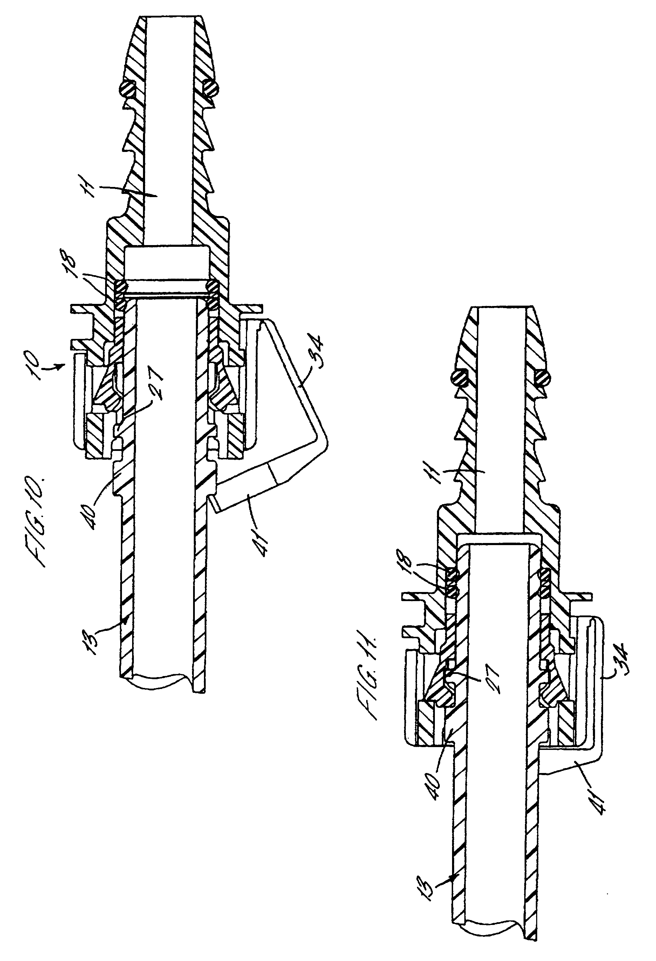

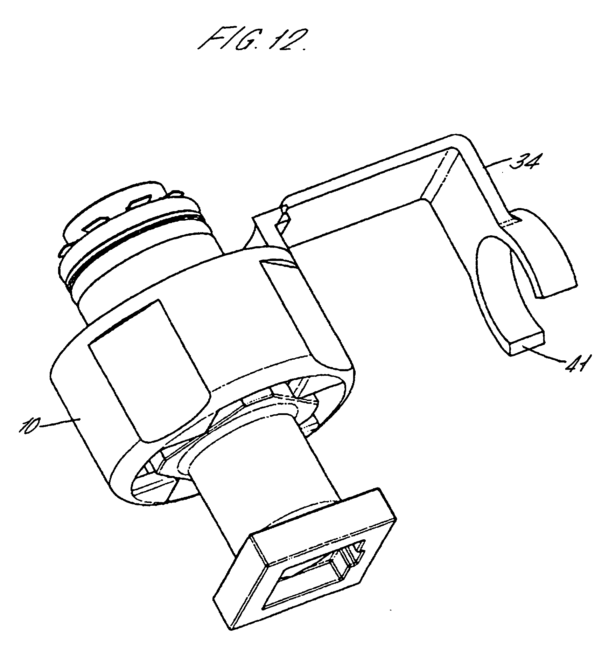

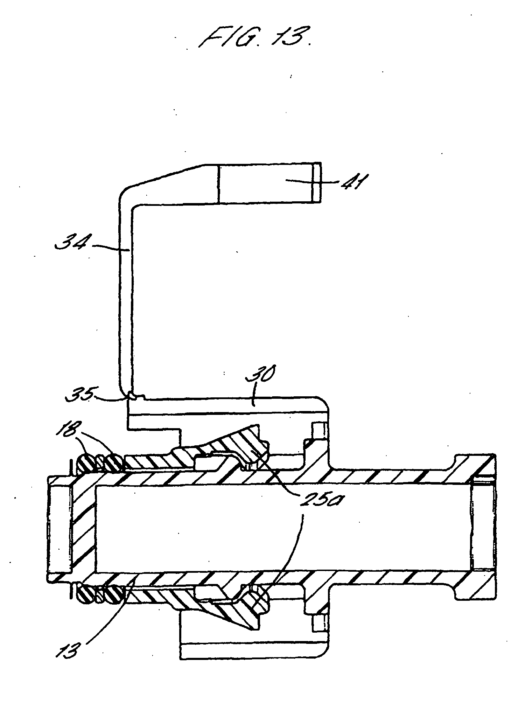

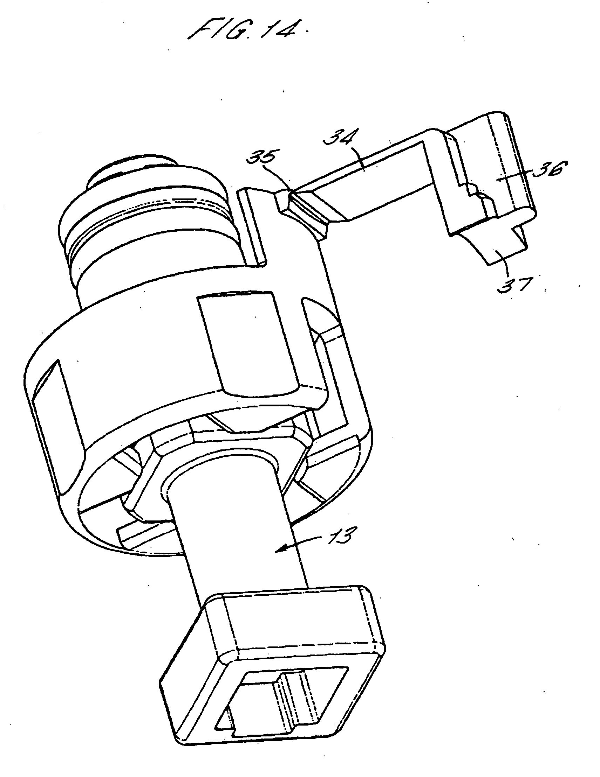

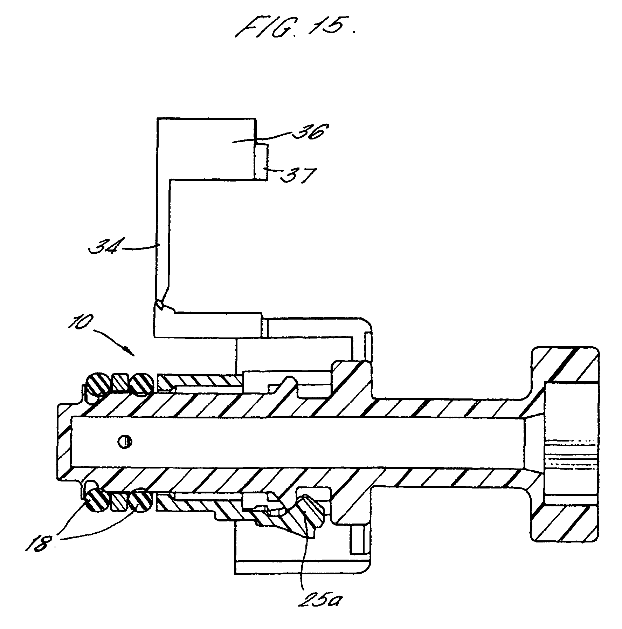

Referring firstly to Figures 1 to 6 of the drawings, there is shown a modified form of the tube coupling described as illustrated in our European patent publication no. 0829671 and in particular Figures 9 and 10 of that specification to which reference should be made. The coupling comprises a coupling body 10 having a stepped throughway 11 open at one end 12 of the coupling body to receive a tube end fitting indicated at 13. The tube end fitting in this case is a standard male end form to SAE (Society of Automotive Engineers) J2044. Other similar fittings are equally applicable. The throughway 11 is stepped at 14 to an enlonged diameter portion 15 to receive the tube end 13 with a close or interference fit. The throughway is stepped at 16 to a second enlarged diameter portion 17 in which a pair of 0-ring seals 18 are located with a spacer 19 between them to seal on the outside of the tube end 13. The throughway has a further step 20 to an enlarged diameter portion 21 which extends through to the open end of the throughway at 12.

A first internal latch is located within the coupling body 10 and comprises a sleeve 22 extending through the enlarged diameter portion 21 of the throughway 21 and having a reduced diameter end portion 23 to engage in portion 17 of the throughway. The sleeve has three integral resilient legs 24 disposed over three quarters of the circumference of the sleeve and projecting towards the open end of the coupling. The legs have latch members 25 at their distal ends which have outwardly extending abutments which engage in radial opening 26 through the wall of the coupling body and have inwardly projecting teeth 25a to engage a raised annular abutment or bead 27 on the tube end. Reference should be made to our European patent publication no. 0829671 for a more detailed description of the form of the latch members and the manner of their engagement with the raised abutment on the tube end and in the openings 26 of the coupling body wall to retain the tube end in the coupling.

The sleeve 22 has integral struts 28 projecting between the teeth to the open end of the coupling body. The struts are formed integrally with an end cap 30 encircling the end of the coupling body and which is adjustable axially on the coupling body to adjust the position of the internal latches for release of a tube end from the coupling body as described in our previous European publication.

As indicated above, the legs/internal latch members in the coupling body are provided over three quarters of the circumference of the sleeve. The remaining quarter of the sleeve is disposed opposite a slot 31 formed with the wall of the coupling body and a corresponding slot 32 formed in the wall of the cap. The wall of the cap has an extension 33 in alignment with the slot 30 and a leg 34 is attached to the extension by an integral hinge 35. The leg has a detent 36 at its distal end shaped to extend through the slots in the cap and coupling body and to engage the end of the tube behind the raised rib 27 to provide a secondary, external latch for holding the tube in place in the coupling body. The end of the detent 36 is radiused as shown at 37 with a corresponding radius to the tube end to provide a close engagement between the abutment and tube. The detent is formed with abutments 36a which snap behind abutments on either side of the slot in the coupling body to retain the detent in the engaged position. In the addition, the hinge 35 between the leg 34 and cap extension 33 has a moulded characteristic such that the leg 34 snaps towards the coupling body when adjacent the body and snaps outwardly of the body when withdrawn beyond an intermediate position in its travel. The leg then stands outwardly of the coupling body and provides a clear visual or tactile indication that it is not engaged.

Figures 7 to 11 show a broadly similar arrangement except that in this case the tube end 13 has a second raised bead 40 beyond the first bead or abutment 27 and the detent 36 on the leg 34 is arranged to project beyond body in the closed position and to engage the tube end 13 beyond the second bead 40. Thus in this arrangement the abutment does not fit between slots in the cap and coupling body so the coupling body may be provided with four internal latches to engage the bead 27 rather than three of the first embodiments. Also the detent is in the form of a C-shaped clip which is a snap fit on the tube end. The arrangement is otherwise much the same as that of Figure 1.

The arrangement of Figures 1 to 6 can also be adapted to have four latch members within the coupling body and one pair of members spaced sufficiently to accommodate the external manual latch between them.

Figures 12 to 15 shows similar arrangements applied to stuffer pins rather than tube ends.

## Claims

1. A coupling for a tube (13) having a feature (27) spaced from an end of the tube for engagement by latching devices, the coupling comprising a coupling body (10) having a throughway (11) open at one and (12) to receive an end portion of the tube;
a seal (18) mounted in the coupling body at a location (17) spaced from said open end thereof to engage and seal with the outer periphery of the tube (13),
a first latching device (25) disposed within the coupling body having at least one latch (25a) to engage automatically with the feature (27) on the tube when the tube has been inserted sufficiently into the throughway to engage with the seal to thereby retain the tube in the coupling body,
and a second, manually operable latching device (30, 31, 32) disposed externally of the coupling body mounted on the coupling body, manually moveable between one operative position in which the second latching device is engageable with the feature on the tube when the tube has been inserted into the coupling body sufficiently for the first latching device to engage to provide a second independent retention for the tube in the coupling body, and an inoperative position withdrawn from the tube to allow release of the tube from the coupling body,
said second latching device comprises an end cap mounted on the coupling body, the cap (30) having an opening in the end thereof for the tube to extend through into the coupling body **characterised in that** said end cap (30) is encircling the open end of the coupling body and has a mounting leg (34) on which the second latch (36) is located, the leg being hinged to the cap to move between said operative and inoperative positions on the cap, the hinged mounting leg including an integral spring (35) adapted to bias the second latching device towards the inoperative position withdrawn from the tube when the second latch device is disengaged from a tube in the coupling body.

2. A coupling as claimed in claim 1, **characterised in that** the cap and coupling body have slots (32, 31) through which the detent (36) on the leg (34) can project to engage a feature on the tube which is also engaged by the first latching device within the coupling body.

3. A coupling as claimed in claim 2, wherein interengaging abutment means (36a) are provided on the detent (36) and coupling body to retain the detent engaged in said slots in the coupling body and cap.

4. A coupling as claimed in claim 1, **characterised in that** the leg (34) is hingedly mounted to the cap (30) and when the tube is inserted into the coupling body the second latching device (36) is arranged to engage a second feature on the tube which is located externally of the coupling body thereby to retain the tube in the coupling body.

5. A coupling as claimed in claim 4, wherein the detent on the arm (34) comprises a C-shaped clip (41) to snap around the tube.

## Patentansprüche

1. Kupplung für ein Rohr (13), das im Abstand zu einem Ende des Rohres eine Ausformung (27) für den Eingriff von Riegelvorrichtungen hat, wobei die Kupplung aufweist einen Kupplungskörper (10) mit einem Durchgang (11), der an einem Ende (12) für die Aufnahme eines Endteils des Rohres offen ist;
eine Dichtung (18), die in dem Kupplungskörper an einem Ort (17) im Abstand zu dessen offenem Ende montiert ist, um an dem Außenumfang des Rohres (13) in Anlage zu gelangen und abzudichten,
eine erste Riegelvorrichtung (25), die innerhalb des Kupplungskörpers angeordnet ist, mit wenigstens einem Riegel (25a) zum automatischen Einrasten in die Ausformung (27) an dem Rohr, wenn das Rohr ausreichend in den Durchgang eingesteckt worden ist, um mit der Dichtung zusammenzuwirken, um **dadurch** das Rohr in dem Kupplungskörper zu halten,
und eine zweite, manuell betätigbare Riegelvorrichtung (30, 31, 32), die außerhalb des Kupplungskörpers montiert ist, und von Hand bewegbar ist zwischen einer Arbeitsstellung, in welcher die zweite Riegelvorrichtung in die Ausformung am Rohr in Eingriff bringbar ist, wenn das Rohr in den Kupplungskörper ausreichend eingesteckt worden ist, damit die erste Riegelvorrichtung einrasten kann, um eine zweite unabhängige Rückhaltung des Rohres im Kupplungskörper zu bewirken, und einer Ruhestellung, in der sie von dem Rohr weggezogen ist, um eine Freigabe des Rohrs von dem Kupplungskörper zu ermöglichen,
wobei die zweite Riegelvorrichtung eine Endkappe aufweist, die an dem Kupplungskörper montiert ist, die Kappe (30) in ihrem Ende eine Öffnung hat, damit das Rohr sich durch diese hindurch in den Kupplungskörper erstrecken kann, **dadurch gekennzeichnet, dass** die Endkappe (30) das offene Ende des Kupplungskörpers umgibt und einen Befestigungsschenkel (34) hat, an welchem der zweite Riegel (36) angeordnet ist, der Schenkel an die Kappe angelenkt ist, um zwischen der Arbeits- und der Ruhestellung an der Kappe bewegbar zu sein, der angelenkte Befestigungsschenkel eine integrale Feder (35) aufweist, die so ausgebildet ist, dass sie die zweite Riegelvorrichtung in Richtung auf die von dem Rohr weggezogene Ruhestellung vorspannt, wenn die zweite Riegelvorrichtung außer Eingriff mit einem Rohr in dem Kupplungskörper ist.

2. Kupplung nach Anspruch 1, **dadurch gekennzeichnet, dass** die Kappe und der Kupplungskörper Schlitze (32, 31) haben, durch welche hindurch der Riegel (36) an dem Schenkel (34) vorstehen kann, um mit einer Ausformung an dem Rohr in Eingriff zu gelangen, mit welcher auch die erste Riegelvorrichtung innerhalb des Kupplungskörpers im Eingriff steht.

3. Kupplung nach Anspruch 2, wobei die zusammenwirkenden Anschlagsmittel (36a) an dem Riegel (36) und dem Kupplungskörper vorgesehen sind, um den Riegel mit den Schlitzen in dem Kupplungskörper und der Kappe in Eingriff zu halten.

4. Kupplung nach Anspruch 1, **dadurch gekennzeichnet, dass** der Schenkel (34) an der Kappe (30) schwenkbar gelagert ist und, wenn das Rohr in den Kupplungskörper eingesteckt ist, die zweite Riegelvorrichtung (36) so angeordnet ist, dass sie mit einer zweiten Ausformung am Rohr in Eingriff steht, die außerhalb des Kupplungskörpers liegt, um **dadurch** das Rohr in dem Kupplungskörper zu halten.

5. Kupplung nach Anspruch 4, wobei der Riegel an dem Arm (34) eine C-förmige Klemme (41) zum Einschnappen um das Rohr herum aufweist.

## Revendications

1. Raccord pour un tuyau (13) ayant un élément (27) espacé d'une extrémité du tuyau pour un engagement par des dispositifs de verrouillage, le raccord comprenant un corps de raccord (10) ayant un passage direct (11) ouvert à une extrémité (12) pour recevoir une partie d'extrémité du tuyau ;
un joint d'étanchéité (18) monté dans le corps de raccord à un emplacement (17) espacé de ladite extrémité ouverte de celui-ci, pour être engagé avec et rendre étanche la périphérie externe du tuyau (13),
un premier dispositif de verrouillage (25) disposé dans le corps de raccord ayant au moins un verrou (25a) pour s'engager automatiquement avec l'élément (27) sur le tuyau lorsque le tuyau a été suffisamment inséré dans le passage direct pour être engagé avec le joint d'étanchéité pour retenir ainsi le tuyau dans le corps de raccord,
et un second dispositif de verrouillage (30, 31, 32) pouvant être actionné manuellement, disposé à l'extérieur du corps de raccord, monté sur le corps de raccord, manuellement mobile entre une position de fonctionnement dans laquelle le second dispositif de verrouillage peut être engagé avec l'élément sur le tuyau lorsque le tuyau a été inséré suffisamment dans le corps de raccord pour que le premier dispositif de verrouillage s'engage pour fournir une seconde retenue indépendante pour le tuyau dans le corps de raccord, et une position de non-fonctionnement retirée du tuyau pour permettre le retrait du tuyau du corps de raccord,
ledit second dispositif de verrouillage comprend un capuchon d'extrémité monté sur le corps de raccord, le capuchon (30) ayant une ouverture dans son extrémité pour que le tuyau s'étende à travers le corps de raccord, **caractérisé en ce que** ledit capuchon d'extrémité (30) encercle l'extrémité ouverte du corps de raccord et a une patte de montage (34) sur laquelle le second verrou (36) est positionné, la patte étant articulée par rapport au capuchon pour se déplacer entre lesdites positions de fonctionnement et de non-fonctionnement sur le capuchon, la patte de montage articulée comprenant un ressort (35) solidaire adapté pour solliciter le second dispositif de verrouillage vers la position de non-fonctionnement retirée du tuyau lorsque le second dispositif de verrouillage est dégagé d'un tuyau dans le corps de raccord.

2. Raccord selon la revendication 1, **caractérisé en ce que** le capuchon et le corps de raccord ont des fentes (32, 31) à travers lesquelles la détente (36) sur la patte (34) peut faire saillie pour engager un élément sur le tuyau qui est également engagé par le premier dispositif de verrouillage à l'intérieur du corps de raccord.

3. Raccord selon la revendication 2, dans lequel sont prévus des moyens de butée à mise en prise mutuelle (36a) sur la détente (36) et le corps de raccord pour retenir la détente engagée dans lesdites fentes dans le corps de raccord et le capuchon.

4. Raccord selon la revendication 1, **caractérisé en ce que** la patte (34) est montée de manière articulée sur le capuchon (30) et lorsque le tuyau est inséré dans le corps de raccord, le second dispositif de verrouillage (36) est agencé pour engager un second élément sur le tuyau qui est situé à l'extérieur du corps de raccord pour retenir ainsi le tuyau dans le corps de raccord.

5. Raccord selon la revendication 4, dans lequel la détente sur le bras (34) comprend un clip en forme de C (41) pour s'enclencher autour du tuyau.
